# EUROPEAN PATENT APPLICATION

(11) **EP 3 737 058 A1**
(43) Date of publication of application: **11.11.2020**
(21) Application number: 18898732.5
(22) Date of filing: 05.01.2018
(51) Int. Cl.: H04L 27/26, H04W 72/04

(54) **USER TERMINAL AND WIRELESS COMMUNICATION METHOD**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); GUO, Shaozhen, Beijing 100190 (CN); WANG, Lihui, Beijing 100190 (CN); HOU, Xiaolin, Beijing 100190 (CN)
(74) Representative: Hoffmann Eitle
(86) International application number: PCT/JP2018/000127
(87) International publication number: WO 2019/135288

(57) **Abstract**

A user terminal according to one aspect of the present disclosure includes: a receiving section that receives downlink control information including instruction information in relation to a plurality of frequency domains, the instruction information instructing a slot format associated with a frequency domain; and a control section that specifies the frequency domain associated with the instruction information, and decides a transmission direction used in the specified frequency domain according to the slot format instructed by the instruction information, and, when a payload size of the downlink control information is a first value or less and a number of pieces of the instruction information included in the downlink control information exceeds a second value, the control section assumes that the downlink control information includes the instruction information associated with a carrier in a serving cell. According to one aspect of the present disclosure, even when a plurality of frequency domains are used, it is possible to appropriately decide a slot format associated with each domain.

## Description

### Technical Field

The present disclosure relates to a user terminal and a radio communication method of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for a larger capacity and higher sophistication than those of LTE (LTE Rel. 8 and 9), LTE-Advanced (LTE-A and LTE Rel. 10, 11, 12 and 13) has been specified.

LTE successor systems (also referred to as, for example, Future Radio Access (FRA), the 5th generation mobile communication system (5G), 5G+ (plus), New Radio (NR), New radio access (NX), Future generation radio access (FX) or LTE Rel. 14, 15 or subsequent releases) have been also studied.

Legacy LTE systems (e.g., LTE Rel. 8 to 13) perform communication on Downlink (DL) and/or Uplink (UL) by using subframes of 1 ms as a scheduling unit. The subframe includes 14 symbols of 15 kHz in subcarrier spacing in a case of, for example, a Normal Cyclic Prefix (NCP). The subframe is also referred to as, for example, a Transmission Time Interval (TTI).

Furthermore, the legacy LTE systems support Time Division Duplex (TDD) and/or Frequency Division Duplex (FDD). According to TDD, a transmission direction of each subframe is semi-statically controlled based on a UL/DL configuration that defines the transmission direction (UL and/or DL) of each subframe in a radio frame.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

It has been studied for a future radio communication system (also referred to simply as NR below) to use a time unit different from subframes of the legacy LTE systems as a scheduling unit of data transmission/reception. The time unit may be, for example, a slot or a mini slot. Furthermore, it has been also studied to dynamically control a transmission direction (UL or DL) per symbol in the time unit.

By the way, it has been studied for NR that a UE concurrently uses, and/or switches between and uses a plurality of frequency domains. For example, the UE may be configured to use one or a plurality of Component Carriers (CCs), or may be configured to use one or a plurality of Bandwidth Parts (BWPs) included in a CC. In this regard, the BWP corresponds to one or more partial frequency bands in a CC configured in NR. The BWP may be referred to as a partial frequency band or a partial band.

However, study on how to decide a slot format associated with each domain when a plurality of these frequency domains are used has not advanced yet. Unless an appropriate slot format decision method is used, there is a risk that the UE erroneously decides the transmission direction, and a communication throughput and frequency use efficiency deteriorate.

It is therefore one of objects of the present disclosure to provide a user terminal and a radio communication method that, even when a plurality of frequency domains are used, can appropriately decide a slot format associated with each domain.

### Solution to Problem

A user terminal according to one aspect of the present disclosure includes: a receiving section that receives downlink control information including instruction information in relation to a plurality of frequency domains, the instruction information instructing a slot format associated with a frequency domain; and a control section that specifies the frequency domain associated with the instruction information, and decides a transmission direction used in the specified frequency domain according to the slot format instructed by the instruction information, and, when a payload size of the downlink control information is a first value or less and a number of pieces of the instruction information included in the downlink control information exceeds a second value, the control section assumes that the downlink control information includes the instruction information associated with a carrier in a serving cell.

### Advantageous Effects of Invention

According to one aspect of the present disclosure, even when a plurality of frequency domains are used, it is possible to appropriately decide a slot format associated with each domain.

### Brief Description of Drawings

Fig. 1 is a diagram illustrating one example of control based on an SFI DCI format.
Fig. 2 is a diagram illustrating one example of a configuration of an SFI DCI format according to a first embodiment.
Fig. 3 is a diagram illustrating one example of a configuration of an SFI DCI format according to a second embodiment.
Fig. 4 is a diagram illustrating one example of a configuration of an SFI DCI format according to a third embodiment.
Fig. 5 is a diagram illustrating one example of a configuration of an SFI DCI format according to a modified example of the second embodiment.
Fig. 6 is a diagram illustrating one example of a schematic configuration of a radio communication system according to one embodiment.
Fig. 7 is a diagram illustrating one example of an overall configuration of a radio base station according to the one embodiment.
Fig. 8 is a diagram illustrating one example of a function configuration of the radio base station according to the one embodiment.
Fig. 9 is a diagram illustrating one example of an overall configuration of a user terminal according to the one embodiment.
Fig. 10 is a diagram illustrating one example of a function configuration of the user terminal according to the one embodiment.
Fig. 11 is a diagram illustrating one example of hardware configurations of the radio base station and the user terminal according to the one embodiment.

### Description of Embodiments

It has been agreed for NR to use a given time unit (e.g., slot) as a scheduling unit of a data channel. In addition, the data channel may include a DL data channel (e.g., Physical Downlink Shared Channel (PDSCH) and a UL data channel (e.g., Physical Uplink Shared Channel (PUSCH)).

The number of symbols per slot may be 7 or 14 symbols. The slot may be a time unit based on numerologies (e.g., a subcarrier spacing and/or a symbol length) applied by a user terminal. The number of symbols per slot may be defined according to the subcarrier spacing.

Furthermore, it is assumed for NR to dynamically control a transmission direction (at least one of UL, DL and flexible) per symbol included in a slot. For example, it has been studied to notify a user terminal (UE: User Equipment) of information (also referred to as, for example, Slot Format Related Information (SFI or Slot Format Indicator)) related to one or more sot formats at a given periodicity.

The SFI may be included in Downlink Control Information (DCI) for slot format notification transmitted on a downlink control channel (e.g., group-common PDCCH (Physical Downlink Control Channel)). The slot format notification DCI may be defined separately from DCI used for scheduling of data.

The slot format notification DCI may be referred to as an SFI DCI format, a DCI format 2_0, a DCI format 2A, a DCI format 2, an SFI-PDCCH or SFI-DCI. In addition, a "DCI format" may be used interchangeably with "DCI".

A UE may monitor an SFI DCI format for a slot per given periodicity. A periodicity (that may be referred to as, for example, an SFI monitoring periodicity) for monitoring the SFI DCI format may be notified in advance from a base station (e.g., a Base Station (BS), a Transmission/Reception Point (TRP), an eNodeB (eNB) or a gNB (NR NodeB)) to the UE by using, for example, a higher layer signaling.

In this regard, the higher layer signaling may be, for example, one of a Radio Resource Control (RRC) signaling, a Medium Access Control (MAC) signaling and broadcast information or a combination of these.

The MAC signaling may use, for example, an MAC Control Element (MAC CE) or an MAC Protocol Data Unit (PDU). The broadcast information may be, for example, a Master Information Block (MIB), a System Information Block (SIB) or Remaining Minimum System Information (RMSI).

When detecting the SFI DCI format in a given slot (mT_{SFI}), the UE decides a slot format of each slot {mT_{SFI}, mT_{SFI}+1, ..., (m+1)T_{SFI}-1} in a serving cell based on at least the DCI. In this regard, m may be an arbitrary integer, or may be a monitoring time index of the SFI DCI format (e.g., a slot number for monitoring the SFI DCI format in a radio frame). T_{SFI} corresponds to a parameter (*SFI-monitoring-periodicity*) related to an SFI monitoring periodicity, and may be configured to the UE by a higher layer signaling.

For example, the UE monitors the slot format notification DCI according to parameters notified by a higher layer signaling. As the parameters, a Radio Network Temporary Identifier (RNTI) (e.g., SFI-RNTI) that masks a Cyclic Redundancy Check (CRC) bit of the DCI, a payload of the DCI (i.e., the number of information bits except the CRC or including the CRC), a PDCCH aggregation level for performing blind detection, the number of blind detection candidates at the PDCCH aggregation level, and, moreover, a cell (e.g., *cell-to-SFI*) for monitoring the slot format notification DCI for the cell (carrier) can be included.

The UE may monitor the slot format notification DCI according to at least one of these parameters, and decide a format of each slot based on a value indicated by a specific field included in the DCI when detecting the DCI. The specific field may be referred to as an SFI field.

The UE controls reception processing (e.g., monitoring periodicity) of the SFI DCI format based on the parameters configured by the base station.

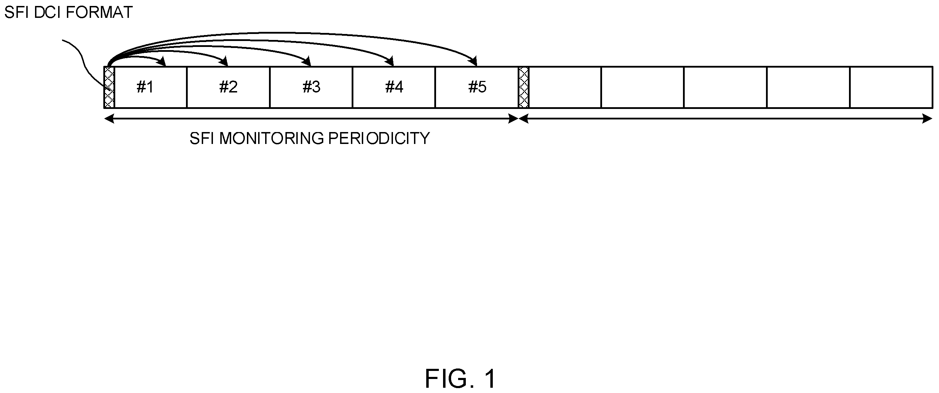

Fig. 1 is a diagram illustrating one example of control based on the SFI DCI format. This example assumes T_{SFI} = 5 slots. When detecting the SFI DCI format in a slot #1, the UE specifies slot formats of slots #1 to #5 according to an SFI field included in the DCI format.

By the way, it has been studied for NR that the UE concurrently uses, and/or switches between and uses a plurality of frequency domains. For example, the UE may be configured to use one or a plurality of Component Carriers (CCs), or may be configured to use one or a plurality of Bandwidth Parts (BWPs) included in a CC. In this regard, the BWP corresponds to one or more partial frequency bands in a CC configured in NR. The BWP may be referred to as a partial frequency band or a partial band.

The UE may control activation and deactivation of the BWP. In this regard, activation of the BWP refers to a state where the BWP is available (or refers to making a transition to the available state), and will be also referred to as, for example, activation or enabling of configuration information of a BWP (BWP configuration information). Furthermore, deactivation of the BWP refers to a state where the BWP is unavailable (or refers to making a transition to the unavailable state), and will be also referred to as, for example, deactivation or disabling of the BWP configuration information.

When activating part of BWPs (e.g., one BWP) of a plurality of configured BWPs, the UE switches the BWP and controls transmission/reception of data. A method for instructing switching of the BWP to the UE to control, and a method for controlling switching of a BWP based on an expiration of a timer are assumed as BWP switching control. Switching of an active BWP may be referred to as BWP switching.

However, study on how to decide a slot format of each domain when a plurality of these frequency domains are used has not advanced yet. Unless an appropriate slot format decision method is used, there is a risk that the UE erroneously decides the transmission direction, and a communication throughput and frequency use efficiency deteriorate.

Hence, the inventors of the present invention have conceived a configuration of a DCI format for appropriately deciding a slot format associated with each domain even when a plurality of frequency domains are used.

Embodiments according to the present invention will be described in detail below with reference to the drawings. A radio communication method according to each embodiment may be each applied alone or may be applied in combination.

### (Radio Communication Method)

### <First Embodiment>

According to the first embodiment, an SFI field included in an SFI DCI format is UE-specific. In addition, the term "UE-specific" may be read as phrases such as "associated with a UE" or "configured by a UE-dedicated higher layer signaling.

The SFI field included in the SFI DCI format may be configured per UE to give a notification of slot formats to UEs in one or a plurality of serving cells.

The SFI DCI format may include different SFI fields to instruct slot formats of a plurality of respectively different UEs. For example, a plurality of SFI fields are associated CCs configured to respectively different UEs, and the UEs may specify these frequency domains based on information such as a cell index or a carrier frequency (such as a center frequency or a frequency bandwidth).

According to the first embodiment, when a plurality of UEs use the same CC, these UEs may use the same slot format or may use different slot formats for the CC.

Furthermore, when one UE uses a plurality of CCs, the UE may use the same slot format or use different slot formats for these CCs. The UE may decide slot formats of a plurality of CCs by referring to one SFI field. For example, the UE may use the same slot format indicated by the one SFI field for a plurality of CCs. The configuration can suitably suppress an increase in a size of an SFI DCI format.

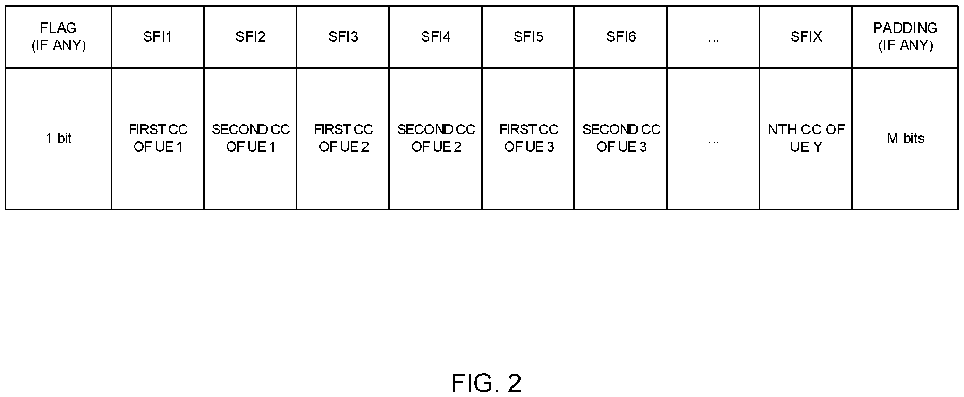

Fig. 2 is a diagram illustrating one example of a configuration of the SFI DCI format according to the first embodiment. This example assumes a case where a pair of the two same CCs (a CC 1 and a CC 2) are configured to a UE 1 and a UE 2, and a pair of two different CCs (a CC 3 and a CC 4) are configured to a UE 3. In addition, a plurality of CCs may not be configured to all UEs at all times.

An "SFI 1" to an "SFI X" illustrated in Fig. 2 are each an SFI field used to instruct a slot format for a specific CC of a specific UE.

For example, an SFI 1 field in Fig. 2 is a field for indicating a slot format for the first CC (e.g., CC 1) of the UE 1. An SFI 2 field is a field for indicating a slot format for the second CC (e.g., CC 2) of the UE 1.

An SFI 3 field in Fig. 2 is a field for indicating a slot format for the first CC (e.g., CC 1) of the UE 2. An SFI 4 field is a field for indicating a slot format for the second CC (e.g., CC 2) of the UE 2.

An SFI 5 field in Fig. 2 is a field for indicating a slot format for the first CC (e.g., CC 3) of the UE 3. An SFI 6 field is a field for indicating a slot format for the second CC (e.g., CC 4) of the UE 3.

An SFI X field in Fig. 2 is a field for indicating a slot format for an Nth CC of a UE Y. Although omitted in Fig. 2, SFI fields for other UEs (and/or CCs of the other UEs) may be included.

In addition, Fig. 2 illustrates an SFI field for a specific UE as contiguous bit fields. However, a field arrangement order is not limited to this. The same applies to subsequent examples.

The UE may be notified of configuration information of the SFI DCI format by using, for example, a higher layer signaling (RRC signaling). The UE may decide a slot format of a specific UE (and/or a CC of the specific UE) from DCI that conforms to the DCI format based on the configuration information.

The configuration information of the SFI DCI format may include information for specifying, for example, at least one of followings:
(1) A payload size of the DCI format (a total number of bits. In addition, the number of CRC bits may not be included or the number of CRC bits may be included),
(2) Respective payload sizes (the total number of bits) of one or a plurality of SFI fields included in the DCI format,
(3) A size and/or a bit position (e.g., a start position or an end position) of an SFI field for a given UE (and/or a given CC of the given UE) included in the DCI format,
(4) An association between a value of the SFI field for the given UE (and/or the given CC of the given UE) included in the DCI format, and a slot format,
(5) The number of SFI fields included in the DCI format, and
(6) The numbers of UEs and/or CCs associated with SFI fields included in the DCI format.

In addition, the SFI DCI format may include a field for a specific flag. The UE may decide whether or not, for example, the detected DCI format is the SFI DCI format based on a value of the field for the specific flag. The field for the specific flag is expressed as 1 bit in Fig. 2. However, the number of bits is not limited to this.

A plurality of SFI fields may have the same size. Furthermore, the SFI DCI format may include a padding bit. When use of the padding bit fluctuates a payload size of an SFI field after a payload size of the DCI format is configured once, the UE can assume that the size of the DCI format is fixed. The padding bit is expressed as M bits in Fig. 2. However, the number of bits is not limited to this.

According to the above-described first embodiment, the SFI DCI format distinguishes and includes the SFI field for each UE that detects the DCI, so that the UE can suitably decide a slot format that needs to be assumed for a configured frequency domain.

### <Second Embodiment>

According to the second embodiment, an SFI field included in an SFI DCI format is cell-specific. In addition, the term "cell-specific" may be read as phrases and terms such as "associated with a cell (CC)", "configured by a cell-specific higher layer signaling", "UE-common" or "UE group-common".

The SFI field included in the SFI DCI format may be configured per cell (or UE group) to give a notification of slot formats to UEs in one or a plurality of serving cells. The cell will be also referred to as a CC below.

The SFI DCI format may include different SFI fields to instruct slot formats of CCs of a plurality of respectively different CCs. For example, a plurality of SFI fields are associated with respectively specific frequency domains, and the UE may specify these frequency domains based on information such as a carrier frequency (e.g., a center frequency or a frequency bandwidth).

In other words, the SFI field included in the SFI DCI format according to the second embodiment is associated with a carrier in a serving cell, yet is configured not to distinguish whether or not the carrier is configured to a specific UE in the serving cell (is not explicitly associated with the specific UE).

According to the second embodiment, when a plurality of UEs use the same CC, these UEs use the same slot format for the CC.

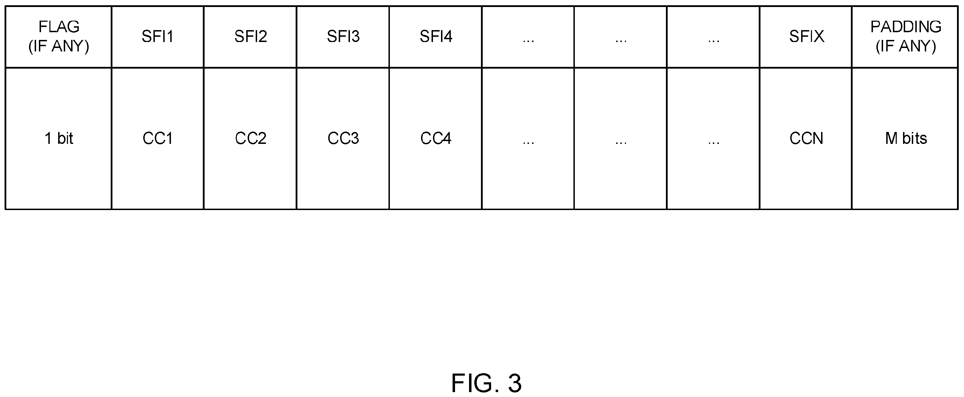

Fig. 3 is a diagram illustrating one example of a configuration of the SFI DCI format according to the second embodiment. Similar to Fig. 2, this example assumes a case where the two same CCs (a CC 1 and a CC 2) are configured to a UE 1 and a UE 2, and two different CCs (a CC 3 and a CC 4) are configured to a UE 3.

An "SFI 1" to an "SFI X" illustrated in Fig. 3 are each an SFI field used to instruct a slot format for a specific CC.

For example, SFI 1 to 4 fields in Fig. 3 are fields for indicating slot formats for the CCs 1 to 4, respectively. For example, the SFI 1 field is used as SFI for the CC 1 by all UEs (the UE 1 and the UE 2 in this case) to which the CC 1 is configured.

An SFI X field in Fig. 3 is a field for indicating a slot format for a CC N. Although omitted in Fig. 3, SFI fields for other CCs may be included. In addition, a field arrangement order is not limited to an example in Fig. 3.

The UE may be notified of configuration information of the SFI DCI format described above in the first embodiment. The UE may decide a slot format of a specific CC from DCI that conforms to the DCI format based on the configuration information. In addition, a "given UE (and/or a given CC of the given UE)" of the configuration information may be read as a "given CC".

A field for a specific flag and a padding bit in Fig. 3 may be the same as those in the example in Fig. 2.

According to the above-described second embodiment, the SFI DCI format distinguishes and includes the SFI field per CC used by one or a plurality of UEs that detect the DCI, so that the UE can suitably decide a slot format that needs to be assumed in a configured frequency domain.

### <Third Embodiment>

According to the third embodiment, whether one or a plurality of SFI fields included in an SFI DCI format are UE-specific or cell-specific is determined by a configuration of a higher layer signaling.

The SFI fields included in the SFI DCI format may be configured per cell (or UE group) to give a notification of slot formats to UEs in one or a plurality of serving cells.

The SFI DCI format may include different SFI fields to instruct slot formats of CCs of a plurality of respectively different CCs.

According to the third embodiment, when a plurality of UEs use the same CC, these UEs may use the same slot format or may use different slot formats for the CC.

Furthermore, when one UE uses a plurality of CCs, the UE may use the same slot format or use different slot formats for these CCs.

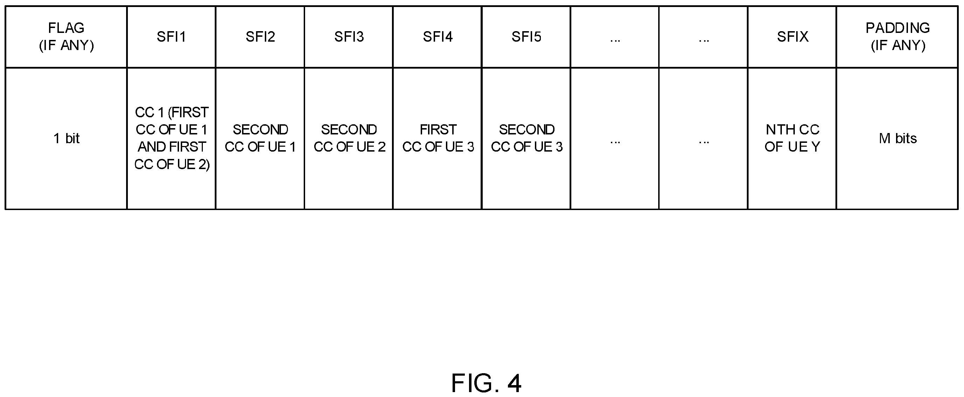

Fig. 4 is a diagram illustrating one example of a configuration of the SFI DCI format according to the third embodiment. Similar to Fig. 2, this example assumes a case where the two same CCs (a CC 1 and a CC 2) are configured to a UE 1 and a UE 2, and two different CCs (a CC 3 and a CC 4) are configured to a UE 3.

An "SFI 1" to an "SFI X" illustrated in Fig. 4 are each an SFI field used to instruct a slot format for a specific CC. In this example, the SFI 1 is a cell-specific field, and the other pieces of SFI are UE-specific fields.

For example, an SFI 1 field in Fig. 4 is a field for indicating a slot format for the CC 1 (that is associated with a first CC of the UE 1 and a first CC of the UE 2).

An SFI 2 field in Fig. 4 is a field for indicating a slot format for a second CC (e.g., CC 2) of the UE 1. An SFI 3 field is a field for indicating a slot format for the second CC (e.g., CC 2) of the UE 2.

An SFI 4 field in Fig. 4 is a field for indicating a slot format for the first CC (e.g., CC 3) of the UE 3. An SFI 5 field is a field for indicating a slot format for the second CC (e.g., CC 4) of the UE 3.

An SFI X field in Fig. 4 is a field for indicating a slot format for an Nth CC of a UE Y. Although omitted in Fig. 4, SFI fields for other UEs (and/or CCs of the other UEs) may be included.

A field for a specific flag and a padding bit in Fig. 4 may be the same as those in the example in Fig. 2.

The UE may be notified of configuration information of the SFI DCI format described above in the first embodiment. The UE may decide a slot format of a specific CC from DCI that conforms to the DCI format based on the configuration information. In addition, a "given UE (and/or a given CC of the given UE)" of the configuration information may be read as a "given CC".

Furthermore, the configuration information according to the third embodiment may include information related to whether a given SFI field included in the DCI format is UE-specific or cell-specific. The information may be indicated by, for example, a bitmap that expresses UE-specific as "1" and cell-specific as "0" and has a length corresponding to the number of SFI fields.

According to the above-described third embodiment, the SFI DCI format can separately use SFI fields directly associated with UEs and SFI fields directly associated with CCs, so that it is possible to suitably adjust a tradeoff between a size of the DCI and control flexibility.

### <Modified Example>

Each of the above-described embodiments has described the example where one SFI field is associated with one CC (cell), yet is not limited to this. One SFI field may be associated with a plurality of frequency domains.

For example, one SFI field may be associated with a plurality of CCs. In the example in Fig. 2, an SFI 1 field may be used to instruct slot formats of both of first and second CCs of a UE 1. Furthermore, in the example in Fig. 3, the SFI 1 field may be used to instruct slot formats of both of a CC 1 and a CC 2.

Furthermore, when one or a plurality of BWPs are configured to a CC, the SFI field may be associated with one or a plurality of BWPs of the CC. When, for example, M BWP configurations are configured to the UE in relation to a certain CC, M SFI fields associated with the respectively different BWP configurations may be configured to the UE for the CC.

The SFI fields may be associated with user terminals in a serving cell as in the first embodiment (e.g., the SFI field per BWP configuration (or a BWP index or a BWP ID) configured to the UE may be notified), or may be associated with a carrier in the serving cell as in the second embodiment (e.g., the SFI field per carrier used in a cell may be notified).

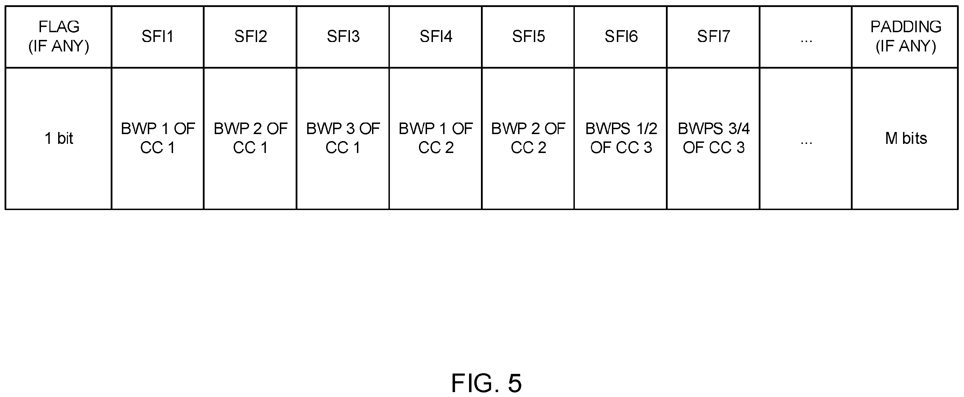

Fig. 5 is a diagram illustrating one example of a configuration of the SFI DCI format according to the modified example of the second embodiment. This example assumes that three BWPs are configured to the CC 1, two BWPs are configured to the CC 2, and four BWPs are configured to a CC 3.

"SFI i" (i = 1, ..., 7, ...) illustrated in Fig. 5 is each an SFI field used to instruct a slot format for a specific BWP of a specific CC.

For example, SFI 1 to 3 fields in Fig. 5 are respectively fields for indicating slot formats for BWPs 1 to 3 of the CC 1. SFI 4 and 5 fields in Fig. 5 are respectively fields for indicating slot formats for the BWP 1 and 2 of the CC 2. SFI 6 and 7 fields in Fig. 5 are respectively fields for indicating slot formats for the BWPs 1 and 2 and BWPs 3 and 4 of the CC 3.

According to the above configuration where the SFI DCI format includes the SFI fields respectively associated with a plurality of BWPs, even when BWP switching occurs in the middle of an SFI monitoring periodicity, it is possible to appropriately control a slot format. For example, the UE can refer to an SFI field related to a BWP before a change in a duration before BWP switching, and refer to an SFI field related to the BWP after the change in a duration after BWP switching.

### <Modified Example 2>

When a given condition is satisfied, a UE may assume that an SFI DCI format to be detected corresponds to one of SFI DCI formats according to the above-described embodiments.

When, for example, one or a plurality of values specified based on configuration information of the above-described SFI DCI format exceeds (or are equal to or more than, equal to or less than or less than) respectively corresponding thresholds, or are included in a range (or are not included in the range) of the corresponding values, the UE may assume that the SFI DCI format to be detected corresponds to one of the SFI DCI formats according to the above-described embodiments.

In this regard, information such as the thresholds and the range of the values may be notified to the UE by, for example, a higher layer signaling, or may be decided by the UE.

When a payload size (that may be expressed as *SFI-DCI-payload-length*) of the SFI DCI format is equal to or less than (or less than) a first value, and the number of SFI fields (the numbers of UEs and/or CCs associated with the SFI fields) included in the DCI format exceeds (or is equal to or more than) a second value, the UE may assume that the SFI DCI format to be detected corresponds to the SFI DCI format according to the above second embodiment.

According to a configuration of modified example 2, even when that the SFI DCI format to be detected corresponds to one of the SFI DCI formats according to the above-described embodiments is not explicitly notified, it is possible to suitably specify a frequency domain associated with SFI. In addition, at least part of the configuration information of the SFI DCI format may be explicitly notified to the UE, may be implicitly notified to the UE, or may not be notified.

The SFI DCI formats according to the first to third embodiments may be respectively referred to as, for example, SFI DCI format types 0 to 2.

### (Radio Communication System)

The configuration of the radio communication system according to one embodiment of the present disclosure will be described below. This radio communication system uses one or a combination of the radio communication method according to each of the above embodiments of the present disclosure to perform communication.

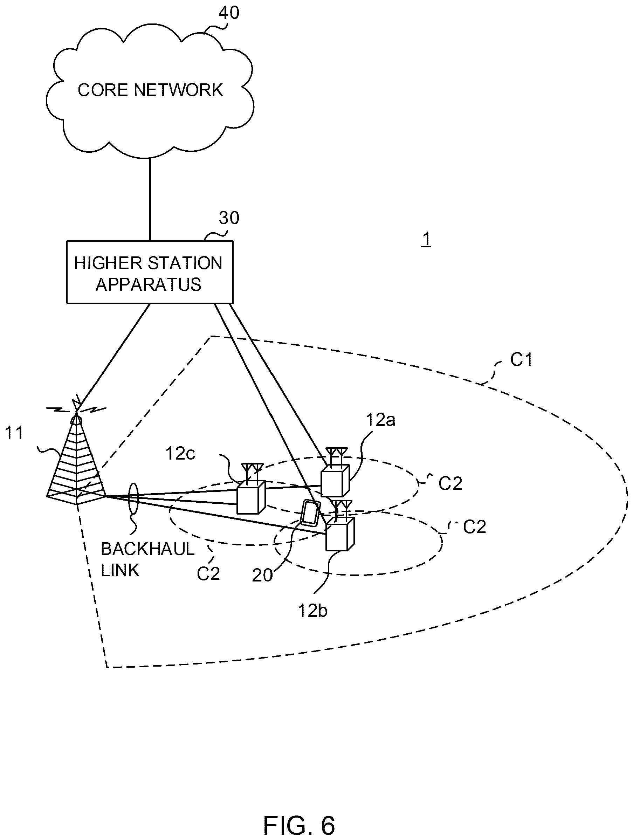

Fig. 6 is a diagram illustrating one example of a schematic configuration of the radio communication system according to the one embodiment. A radio communication system 1 can apply Carrier Aggregation (CA) and/or Dual Connectivity (DC) that aggregate a plurality of base frequency blocks (component carriers) whose 1 unit is a system bandwidth (e.g., 20 MHz) of the LTE system.

In this regard, the radio communication system 1 may be referred to as Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), New Radio (NR), Future Radio Access (FRA) and the New Radio Access Technology (New-RAT), or a system that realizes these techniques.

The radio communication system 1 includes a radio base station 11 that forms a macro cell C1 of a relatively wide coverage, and radio base stations 12 (12a to 12c) that are located in the macro cell C1 and form small cells C2 narrower than the macro cell C1. Furthermore, a user terminal 20 is located in the macro cell C1 and each small cell C2. An arrangement and the numbers of respective cells and the user terminals 20 are not limited to the aspect illustrated in Fig. 6.

The user terminal 20 can connect with both of the radio base station 11 and the radio base stations 12. The user terminal 20 is assumed to concurrently use the macro cell C1 and the small cells C2 by using CA or DC. Furthermore, the user terminal 20 can apply CA or DC by using a plurality of cells (CCs).

The user terminal 20 and the radio base station 11 can communicate by using a carrier (also referred to as a legacy carrier) of a narrow bandwidth in a relatively low frequency band (e.g., 2 GHz). On the other hand, the user terminal 20 and each radio base station 12 may use a carrier of a wide bandwidth in a relatively high frequency band (e.g., 3.5 GHz or 5 GHz) or may use the same carrier as that used between the user terminal 20 and the radio base station 11. In this regard, a configuration of the frequency band used by each radio base station is not limited to this.

Furthermore, the user terminal 20 can perform communication by using Time Division Duplex (TDD) and/or Frequency Division Duplex (FDD) in each cell. Furthermore, each cell (carrier) may be applied a single numerology or may be applied a plurality of different numerologies.

The numerology may be a communication parameter to be applied to transmission and/or reception of a certain signal and/or channel, and may indicate at least one of, for example, a subcarrier spacing, a bandwidth, a symbol length, a cyclic prefix length, a subframe length, a TTI length, the number of symbols per TTI, a radio frame configuration, specific filtering processing performed by a transceiver in a frequency domain, and specific windowing processing performed by the transceiver in a time domain. For example, a case where subcarrier spacings of constituent OFDM symbols are different and/or a case where the numbers of OFDM symbols are different on a certain physical channel may be read as that numerologies are different.

The radio base station 11 and each radio base station 12 (or the two radio base stations 12) may be connected by way of wired connection (e.g., optical fibers compliant with a Common Public Radio Interface (CPRI) or an X2 interface) or radio connection.

The radio base station 11 and each radio base station 12 are each connected with a higher station apparatus 30 and connected with a core network 40 via the higher station apparatus 30. In this regard, the higher station apparatus 30 includes, for example, an access gateway apparatus, a Radio Network Controller (RNC) and a Mobility Management Entity (MME), yet is not limited to these. Furthermore, each radio base station 12 may be connected with the higher station apparatus 30 via the radio base station 11.

In this regard, the radio base station 11 is a radio base station that has a relatively wide coverage, and may be referred to as a macro base station, an aggregate node, an eNodeB (eNB) or a transmission/reception point. Furthermore, each radio base station 12 is a radio base station that has a local coverage, and may be referred to as a small base station, a micro base station, a pico base station, a femto base station, a Home eNodeB (HeNB), a Remote Radio Head (RRH) or a transmission/reception point. The radio base stations 11 and 12 will be collectively referred to as a radio base station 10 below when not distinguished.

Each user terminal 20 is a terminal that supports various communication schemes such as LTE and LTE-A, and may include not only a mobile communication terminal (mobile station) but also a fixed communication terminal (fixed station).

The radio communication system 1 applies Orthogonal Frequency-Division Multiple Access (OFDMA) to downlink and applies Single Carrier-Frequency Division Multiple Access (SC-FDMA) and/or OFDMA to uplink as radio access schemes.

OFDMA is a multicarrier transmission scheme that divides a frequency band into a plurality of narrow frequency bands (subcarriers) and maps data on each subcarrier to perform communication. SC-FDMA is a single carrier transmission scheme that divides a system bandwidth into bands including one or contiguous resource blocks per terminal and causes a plurality of terminals to use respectively different bands to reduce an inter-terminal interference. In this regard, uplink and downlink radio access schemes are not limited to a combination of these schemes, and other radio access schemes may be used.

The radio communication system 1 uses a downlink shared channel (PDSCH: Physical Downlink Shared Channel) shared by each user terminal 20, a broadcast channel (PBCH: Physical Broadcast Channel) and a downlink L1/L2 control channel as downlink channels. User data, higher layer control information and a System Information Block (SIB) are conveyed on the PDSCH. Furthermore, a Master Information Block (MIB) is conveyed on the PBCH.

The downlink L1/L2 control channel includes a Physical Downlink Control Channel (PDCCH), an Enhanced Physical Downlink Control Channel (EPDCCH), a Physical Control Format Indicator Channel (PCFICH), and a Physical Hybrid-ARQ Indicator Channel (PHICH). Downlink Control Information (DCI) including scheduling information of the PDSCH and/or the PUSCH is conveyed on the PDCCH.

In addition, DCI for scheduling DL data reception may be referred to as a DL assignment, and DCI for scheduling UL data transmission may be referred to as a UL grant.

The number of OFDM symbols used for the PDCCH may be conveyed on the PCFICH. Transmission acknowledgement information (also referred to as, for example, retransmission control information, HARQ-ACK or ACK/NACK) of a Hybrid Automatic Repeat reQuest (HARQ) for the PUSCH may be conveyed on the PHICH. The EPDCCH is subjected to frequency division multiplexing with the PDSCH (downlink shared data channel) and is used to convey DCI similar to the PDCCH.

The radio communication system 1 uses an uplink shared channel (PUSCH: Physical Uplink Shared Channel) shared by each user terminal 20, an uplink control channel (PUCCH: Physical Uplink Control Channel), and a random access channel (PRACH: Physical Random Access Channel) as uplink channels. User data and higher layer control information are conveyed on the PUSCH. Furthermore, downlink radio link quality information (CQI: Channel Quality Indicator), transmission acknowledgement information and a Scheduling Request (SR) are conveyed on the PUCCH. A random access preamble for establishing connection with a cell is conveyed on the PRACH.

The radio communication system 1 conveys a Cell-specific Reference Signal (CRS), a Channel State Information-Reference Signal (CSI-RS), a DeModulation Reference Signal (DMRS) and a Positioning Reference Signal (PRS) as downlink reference signals. Furthermore, the radio communication system 1 conveys a Sounding Reference Signal (SRS) and a DeModulation Reference Signal (DMRS) as uplink reference signals. In this regard, the DMRS may be referred to as a user terminal-specific reference signal (UE-specific reference signal). Furthermore, a reference signal to be conveyed is not limited to these.

### (Radio Base Station)

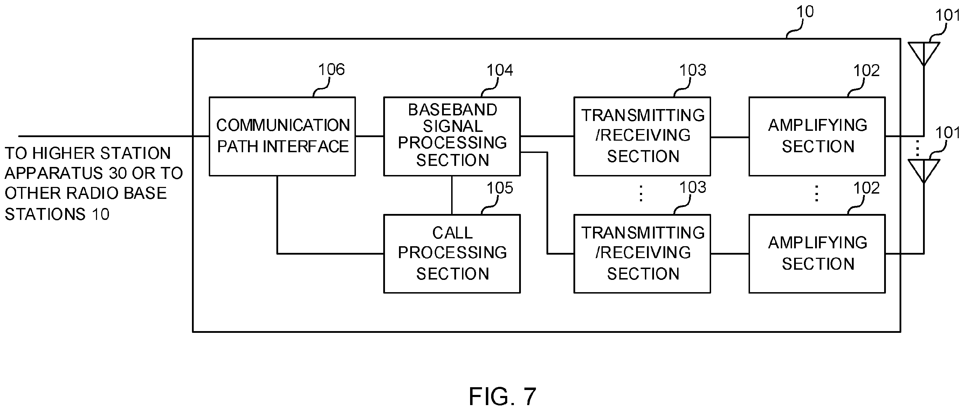

Fig. 7 is a diagram illustrating one example of an overall configuration of the radio base station according to the one embodiment. The radio base station 10 includes pluralities of transmission/reception antennas 101, amplifying sections 102 and transmitting/receiving sections 103, a baseband signal processing section 104, a call processing section 105 and a channel interface 106. In this regard, the radio base station 10 only needs to be configured to include one or more of each of the transmission/reception antennas 101, the amplifying sections 102 and the transmitting/receiving sections 103.

User data transmitted from the radio base station 10 to the user terminal 20 on downlink is input from the higher station apparatus 30 to the baseband signal processing section 104 via the channel interface 106.

The baseband signal processing section 104 performs processing of a Packet Data Convergence Protocol (PDCP) layer, segmentation and concatenation of the user data, transmission processing of a Radio Link Control (RLC) layer such as RLC retransmission control, Medium Access Control (MAC) retransmission control (e.g., HARQ transmission processing), and transmission processing such as scheduling, transmission format selection, channel coding, Inverse Fast Fourier Transform (IFFT) processing, and precoding processing on the user data, and transfers the user data to each transmitting/receiving section 103. Furthermore, the baseband signal processing section 104 performs transmission processing such as channel coding and inverse fast Fourier transform on a downlink control signal, too, and transfers the downlink control signal to each transmitting/receiving section 103.

Each transmitting/receiving section 103 converts a baseband signal precoded and output per antenna from the baseband signal processing section 104 into a radio frequency range, and transmits a radio frequency signal. The radio frequency signal subjected to frequency conversion by each transmitting/receiving section 103 is amplified by each amplifying section 102, and is transmitted from each transmission/reception antenna 101. The transmitting/receiving sections 103 can be composed of transmitters/receivers, transmission/reception circuits or transmission/reception apparatuses described based on a common knowledge in a technical field according to the present disclosure. In this regard, the transmitting/receiving sections 103 may be composed as an integrated transmitting/receiving section or may be composed of transmitting sections and receiving sections.

Meanwhile, each amplifying section 102 amplifies a radio frequency signal received by each transmission/reception antenna 101 as an uplink signal. Each transmitting/receiving section 103 receives the uplink signal amplified by each amplifying section 102. Each transmitting/receiving section 103 performs frequency conversion on the received signal into a baseband signal, and outputs the baseband signal to the baseband signal processing section 104.

The baseband signal processing section 104 performs Fast Fourier Transform (FFT) processing, Inverse Discrete Fourier Transform (IDFT) processing, error correcting decoding, MAC retransmission control reception processing, and reception processing of an RLC layer and a PDCP layer on user data included in the input uplink signal, and transfers the user data to the higher station apparatus 30 via the channel interface 106. The call processing section 105 performs call processing (such as configuration and release) of a communication channel, state management of the radio base station 10 and radio resource management.

The channel interface 106 transmits and receives signals to and from the higher station apparatus 30 via a given interface. Furthermore, the channel interface 106 may transmit and receive (backhaul signaling) signals to and from the another radio base station 10 via an inter-base station interface (e.g., optical fibers compliant with the Common Public Radio Interface (CPRI) or the X2 interface).

Each transmission transmitting/receiving section 103 may transmit Downlink Control Information (DCI) including instruction information (SFI) for instructing a slot format associated with a frequency domain (e.g., at least one of a carrier, a CC, a BWP, an RB, a subcarrier and a subband) in relation to one or a plurality of frequency domains. For example, the DCI may include a plurality of pieces of SFI, and each SFI may be associated with a slot format of a respectively different frequency domain. The DCI may include first SFI associated with a first CC, and second SFI associated with a second CC. The DCI may be referred to as an SFI DCI format.

Each transmitting/receiving section 103 may transmit configuration information of the SFI DCI format to the user terminal 20.

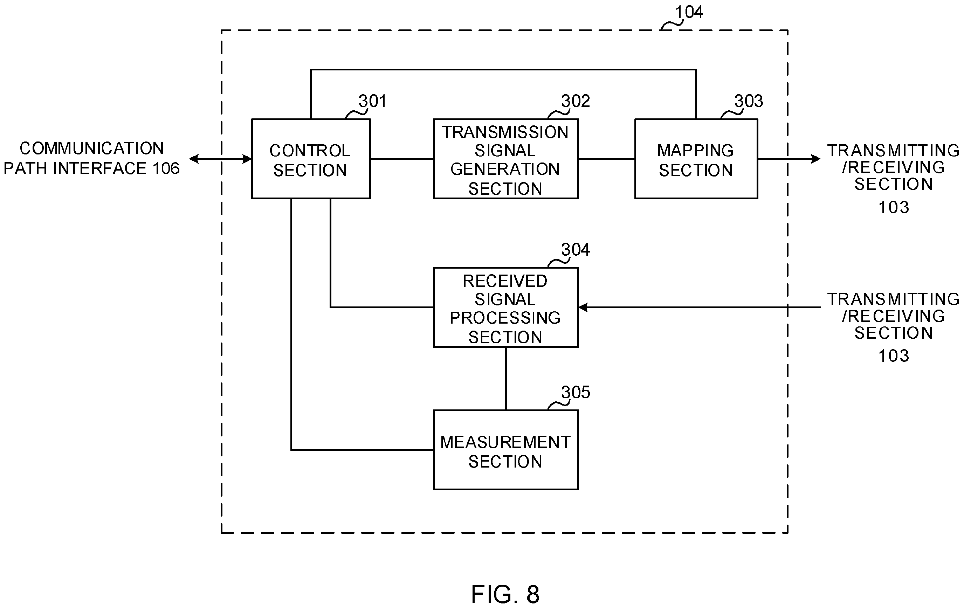

Fig. 8 is a diagram illustrating one example of a function configuration of the radio base station according to the one embodiment of the present disclosure. In addition, this example mainly illustrates function blocks of characteristic portions according to the present embodiment, and assumes that the radio base station 10 includes other function blocks, too, that are necessary for radio communication.

The baseband signal processing section 104 includes at least a control section (scheduler) 301, a transmission signal generating section 302, a mapping section 303, a received signal processing section 304 and a measurement section 305. In addition, these components only need to be included in the radio base station 10, and part or all of the components may not be included in the baseband signal processing section 104.

The control section (scheduler) 301 controls the entire radio base station 10. The control section 301 can be composed of a controller, a control circuit or a control apparatus described based on the common knowledge in the technical field according to the present disclosure.

The control section 301 controls, for example, signal generation of the transmission signal generating section 302 and signal allocation of the mapping section 303. Furthermore, the control section 301 controls signal reception processing of the received signal processing section 304 and signal measurement of the measurement section 305.

The control section 301 controls scheduling (e.g., resource allocation) of system information, a downlink data signal (e.g., a signal that is transmitted on the PDSCH), and a downlink control signal (e.g., a signal that is transmitted on the PDCCH and/or the EPDCCH and is, for example, transmission acknowledgement information). Furthermore, the control section 301 controls generation of a downlink control signal and a downlink data signal based on a result obtained by deciding whether or not it is necessary to perform retransmission control on an uplink data signal.

The control section 301 controls scheduling of synchronization signals (e.g., a Primary Synchronization Signal (PSS)/a Secondary Synchronization Signal (SSS)) and downlink reference signals (e.g., a CRS, a CSI-RS and a DMRS).

The control section 301 controls scheduling of an uplink data signal (e.g., a signal that is transmitted on the PUSCH), an uplink control signal (e.g., a signal that is transmitted on the PUCCH and/or the PUSCH and is, for example, transmission acknowledgement information), a random access preamble (e.g., a signal that is transmitted on the PRACH) and an uplink reference signal.

The control section 301 may perform control to transmit to the user terminal 20 the Downlink Control Information (DCI) including the instruction information (SFI) for instructing the slot format associated with the frequency domain (e.g., at least one of a carrier, a CC, a BWP, an RB, a subcarrier and a subband) in relation to one or a plurality of frequency domains.

The control section 301 may include, in the above DCI, SFI associated with one or both of at least the one user terminal 20 in a serving cell and at least one carrier (the carrier may be read as the above-described frequency domain) in the serving cell. The control section 301 may include, in the above DCI, SFI associated with a BWP.

The control section 301 may configure information indicating whether specific SFI included in the above DCI is associated with at least the one user terminal 20 in the serving cell or is associated with at least the one carrier in the serving cell, to the user terminal 20 by a higher layer signaling.

When a payload size of the above DCI is a first value or less, and the number of SFI fields included in the above DCI exceeds a second value, the control section 301 may configure the above DCI to include the SFI associated with at least one carrier (the carrier may be read as the above-described frequency domain) in the serving cell.

The transmission signal generating section 302 generates a downlink signal (such as a downlink control signal, a downlink data signal or a downlink reference signal) based on an instruction from the control section 301, and outputs the downlink signal to the mapping section 303. The transmission signal generating section 302 can be composed of a signal generator, a signal generating circuit or a signal generating apparatus described based on the common knowledge in the technical field according to the present disclosure.

The transmission signal generating section 302 generates, for example, a DL assignment for notifying downlink data allocation information, and/or a UL grant for notifying uplink data allocation information based on the instruction from the control section 301. The DL assignment and the UL grant are both DCI, and conform to a DCI format. Furthermore, the transmission signal generating section 302 performs encoding processing and modulation processing on a downlink data signal according to a code rate and a modulation scheme determined based on Channel State Information (CSI) from each user terminal 20.

The mapping section 303 maps the downlink signal generated by the transmission signal generating section 302, on given radio resources based on the instruction from the control section 301, and outputs the downlink signal to each transmitting/receiving section 103. The mapping section 303 can be composed of a mapper, a mapping circuit or a mapping apparatus described based on the common knowledge in the technical field according to the present disclosure.

The received signal processing section 304 performs reception processing (e.g., demapping, demodulation and decoding) on a received signal input from each transmitting/receiving section 103. In this regard, the received signal is, for example, an uplink signal (such as an uplink control signal, an uplink data signal or an uplink reference signal) transmitted from the user terminal 20. The received signal processing section 304 can be composed of a signal processor, a signal processing circuit or a signal processing apparatus described based on the common knowledge in the technical field according to the present disclosure.

The received signal processing section 304 outputs information decoded by the reception processing to the control section 301. When, for example, receiving the PUCCH including HARQ-ACK, the received signal processing section 304 outputs the HARQ-ACK to the control section 301. Furthermore, the received signal processing section 304 outputs the received signal and/or the signal after the reception processing to the measurement section 305.

The measurement section 305 performs measurement related to the received signal. The measurement section 305 can be composed of a measurement instrument, a measurement circuit or a measurement apparatus described based on the common knowledge in the technical field according to the present disclosure.

For example, the measurement section 305 may perform Radio Resource Management (RRM) measurement or Channel State Information (CSI) measurement based on the received signal. The measurement section 305 may measure received power (e.g., Reference Signal Received Power (RSRP)), received quality (e.g., Reference Signal Received Quality (RSRQ), a Signal to Interference plus Noise Ratio (SINR) or a Signal to Noise Ratio (SNR)), a signal strength (e.g., a Received Signal Strength Indicator (RSSI)) or channel information (e.g., CSI). The measurement section 305 may output a measurement result to the control section 301.

### (User Terminal)

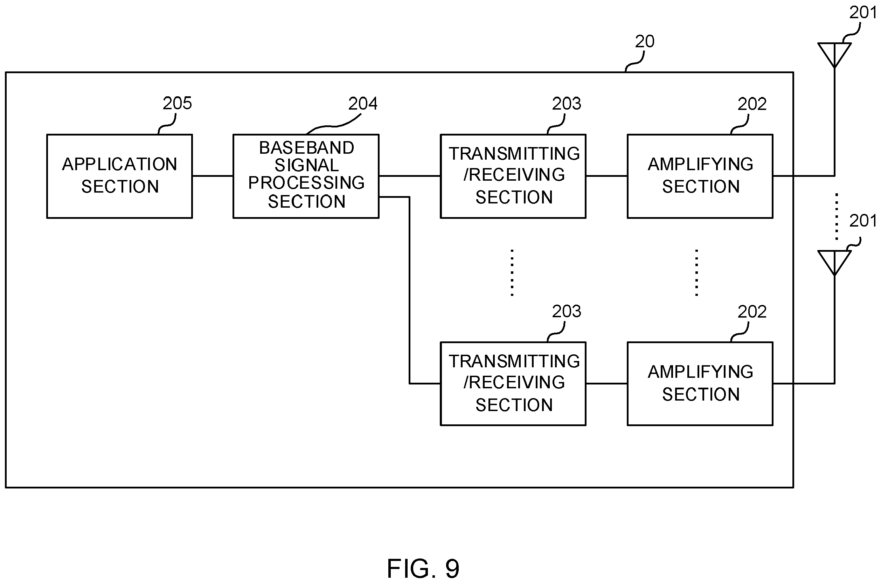

Fig. 9 is a diagram illustrating one example of an overall configuration of the user terminal according to the one embodiment. The user terminal 20 includes pluralities of transmission/reception antennas 201, amplifying sections 202 and transmitting/receiving sections 203, a baseband signal processing section 204 and an application section 205. In this regard, the user terminal 20 only needs to be configured to include one or more of each of the transmission/reception antennas 201, the amplifying sections 202 and the transmitting/receiving sections 203.

Each amplifying section 202 amplifies a radio frequency signal received at each transmission/reception antenna 201. Each transmitting/receiving section 203 receives a downlink signal amplified by each amplifying section 202. Each transmitting/receiving section 203 performs frequency conversion on the received signal into a baseband signal, and outputs the baseband signal to the baseband signal processing section 204. The transmitting/receiving sections 203 can be composed of transmitters/receivers, transmission/reception circuits or transmission/reception apparatuses described based on the common knowledge in the technical field according to the present disclosure. In this regard, the transmitting/receiving sections 203 may be composed as an integrated transmitting/receiving section or may be composed of transmitting sections and receiving sections.

The baseband signal processing section 204 performs FFT processing, error correcting decoding and retransmission control reception processing on the input baseband signal. The baseband signal processing section 204 transfers downlink user data to the application section 205. The application section 205 performs processing related to layers higher than a physical layer and an MAC layer. Furthermore, the baseband signal processing section 204 may transfer broadcast information of the downlink data, too, to the application section 205.

On the other hand, the application section 205 inputs uplink user data to the baseband signal processing section 204. The baseband signal processing section 204 performs retransmission control transmission processing (e.g., HARQ transmission processing), channel coding, precoding, Discrete Fourier Transform (DFT) processing and IFFT processing on the uplink user data, and transfers the uplink user data to each transmitting/receiving section 203.

Each transmitting/receiving section 203 converts the baseband signal output from the baseband signal processing section 204 into a radio frequency range, and transmits a radio frequency signal. The radio frequency signal subjected to the frequency conversion by each transmitting/receiving section 203 is amplified by each amplifying section 202, and is transmitted from each transmission/reception antenna 201.

Each transmission transmitting/receiving section 203 may receive the Downlink Control Information (DCI) including the instruction information (SFI) for instructing the slot format associated with the frequency domain (e.g., at least one of a carrier, a CC, a BWP, an RB, a subcarrier and a subband) in relation to one or a plurality of frequency domains. For example, the DCI may include a plurality of pieces of SFI, and each SFI may be associated with a slot format of a respectively different frequency domain. The DCI may include the first SFI associated with the first CC, and the second SFI associated with the second CC. The DCI may be referred to as the SFI DCI format.

In this regard, a word "different" of the different frequency domains may mean "different" from a viewpoint that these frequency domains are configured to different UEs, or may mean "different" from a viewpoint that parameters (e.g., cell indices or carrier frequencies (center frequencies or frequency bandwidths)) related to these frequency domains are different.

Each transmitting/receiving section 203 may receive the configuration information of the SFI DCI format from the radio base station 10.

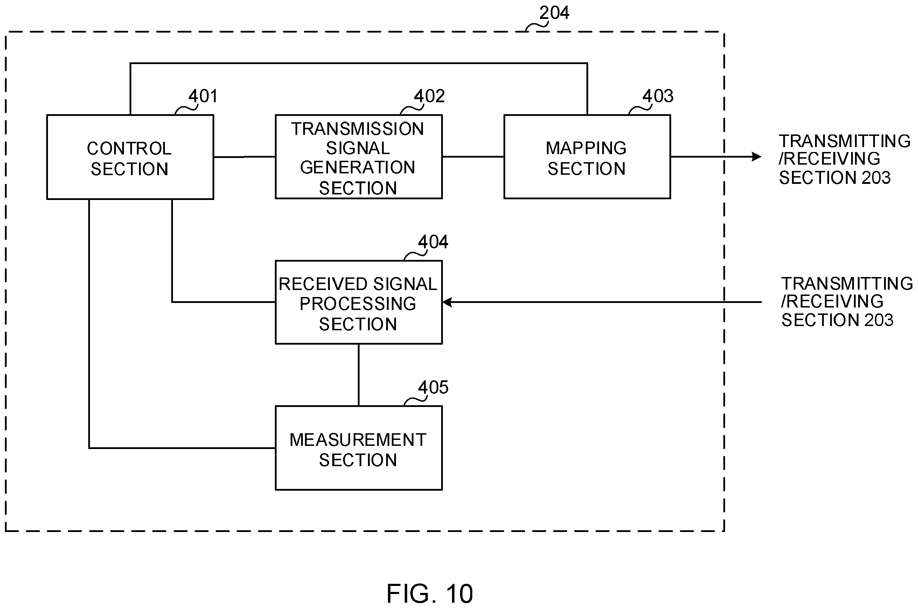

Fig. 10 is a diagram illustrating one example of a function configuration of the user terminal according to the one embodiment. In addition, this example mainly illustrates function blocks of characteristic portions according to the present embodiment, and assumes that the user terminal 20 includes other function blocks, too, that are necessary for radio communication.

The baseband signal processing section 204 of the user terminal 20 includes at least a control section 401, a transmission signal generating section 402, a mapping section 403, a received signal processing section 404 and a measurement section 405. In addition, these components only need to be included in the user terminal 20, and part or all of the components may not be included in the baseband signal processing section 204.

The control section 401 controls the entire user terminal 20. The control section 401 can be composed of a controller, a control circuit or a control apparatus described based on the common knowledge in the technical field according to the present disclosure.

The control section 401 controls, for example, signal generation of the transmission signal generating section 402 and signal allocation of the mapping section 403. Furthermore, the control section 401 controls signal reception processing of the received signal processing section 404 and signal measurement of the measurement section 405.

The control section 401 obtains from the received signal processing section 404 a downlink control signal and a downlink data signal transmitted from the radio base station 10. The control section 401 controls generation of an uplink control signal and/or an uplink data signal based on a result obtained by deciding whether or not it is necessary to perform retransmission control on the downlink control signal and/or the downlink data signal.

The control section 401 may specify the instruction information (SFI) for instructing the slot format associated with the frequency domain (e.g., at least one of a carrier, a CC, a BWP, an RB, a subcarrier and a subband) based on given Downlink Control Information (DCI) obtained from the received signal processing section 404. Furthermore, the control section 401 specifies the frequency domain associated with the SFI, and decides a transmission direction (DL, UL or flexible) used in the specified frequency domain according to the slot format instructed by the above SFI.

In this regard, the above DCI may include SFI associated with one or both of at least the one user terminal 20 in the serving cell and at least the one carrier (the carrier may be read as the above-described frequency domain) in the serving cell. The above DCI may include SFI associated with a BWP.

The control section 401 may decide whether specific SFI included in the above DCI is associated with at least the one user terminal 20 in the serving cell or is associated with at least the one carrier in the serving cell, based on a configuration notified by a higher layer signaling.

When the payload size of the above DCI is the first value or less, and the number of SFI fields included in the above DCI exceeds the second value, the control section 401 may control transmission and/or reception processing assuming that the above DCI includes the SFI associated with at least the one carrier (the carrier may be read as the above-described frequency domain) in the serving cell.

Furthermore, when obtaining from the received signal processing section 404 various pieces of information notified from the radio base station 10, the control section 401 may update parameters used for control based on the various pieces of information.

The transmission signal generating section 402 generates an uplink signal (such as an uplink control signal, an uplink data signal or an uplink reference signal) based on an instruction from the control section 401, and outputs the uplink signal to the mapping section 403. The transmission signal generating section 402 can be composed of a signal generator, a signal generating circuit or a signal generating apparatus described based on the common knowledge in the technical field according to the present disclosure.

The transmission signal generating section 402 generates, for example, an uplink control signal related to transmission acknowledgement information and Channel State Information (CSI) based on, for example, the instruction from the control section 401. Furthermore, the transmission signal generating section 402 generates an uplink data signal based on the instruction from the control section 401. When, for example, the downlink control signal notified from the radio base station 10 includes a UL grant, the transmission signal generating section 402 is instructed by the control section 401 to generate an uplink data signal.

The mapping section 403 maps the uplink signal generated by the transmission signal generating section 402, on radio resources based on the instruction from the control section 401, and outputs the uplink signal to each transmitting/receiving section 203. The mapping section 403 can be composed of a mapper, a mapping circuit or a mapping apparatus described based on the common knowledge in the technical field according to the present disclosure.

The received signal processing section 404 performs reception processing (e.g., demapping, demodulation and decoding) on the received signal input from each transmitting/receiving section 203. In this regard, the received signal is, for example, a downlink signal (such as a downlink control signal, a downlink data signal or a downlink reference signal) transmitted from the radio base station 10. The received signal processing section 404 can be composed of a signal processor, a signal processing circuit or a signal processing apparatus described based on the common knowledge in the technical field according to the present disclosure. Furthermore, the received signal processing section 404 can compose the reception section according to the present disclosure.

The received signal processing section 404 outputs information decoded by the reception processing to the control section 401. The received signal processing section 404 outputs, for example, broadcast information, system information, an RRC signaling and DCI to the control section 401. Furthermore, the received signal processing section 404 outputs the received signal and/or the signal after the reception processing to the measurement section 405.

The measurement section 405 performs measurement related to the received signal. The measurement section 405 can be composed of a measurement instrument, a measurement circuit or a measurement apparatus described based on the common knowledge in the technical field according to the present disclosure.

For example, the measurement section 405 may perform RRM measurement or CSI measurement based on the received signal. The measurement section 405 may measure received power (e.g., RSRP), received quality (e.g., RSRQ, an SINR or an SNR), a signal strength (e.g., RSSI) or channel information (e.g., CSI). The measurement section 405 may output a measurement result to the control section 401.

### (Hardware Configuration)

In addition, the block diagrams used to describe the above embodiments illustrate blocks in function units. These function blocks (components) are realized by an optional combination of hardware and/or software. Furthermore, a method for realizing each function block is not limited in particular. That is, each function block may be realized by using one physically and/or logically coupled apparatus or may be realized by using a plurality of these apparatuses formed by connecting two or more physically and/or logically separate apparatuses directly and/or indirectly (by using, for example, wired connection and/or radio connection).

For example, the radio base station and the user terminal according to the one embodiment of the present disclosure may function as computers that perform processing of the radio communication method according to the present disclosure.

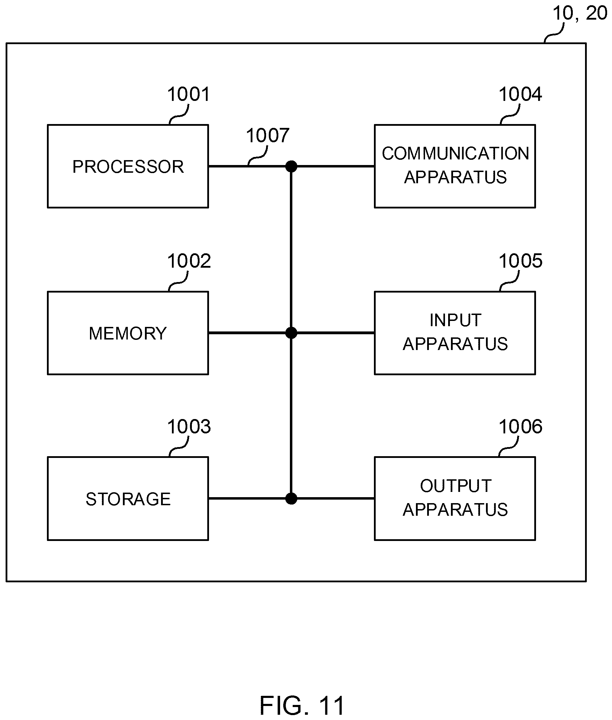

Fig. 11 is a diagram illustrating one example of the hardware configurations of the radio base station and the user terminal according to the one embodiment. The above-described radio base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, a word "apparatus" in the following description can be read as a circuit, a device or a unit. The hardware configurations of the radio base station 10 and the user terminal 20 may be configured to include one or a plurality of apparatuses illustrated in Fig. 11 or may be configured without including part of the apparatuses.

For example, Fig. 11 illustrates the only one processor 1001. However, there may be a plurality of processors. Furthermore, processing may be executed by 1 processor or processing may be executed by 1 or more processors concurrently or successively or by using another method. In addition, the processor 1001 may be implemented by 1 or more chips.

Each function of the radio base station 10 and the user terminal 20 is realized by, for example, causing hardware such as the processor 1001 and the memory 1002 to read given software (program), and thereby causing the processor 1001 to perform an operation, and control communication via the communication apparatus 1004 and control reading and/or writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, the above-described baseband signal processing section 104 (204) and call processing section 105 may be realized by the processor 1001.

Furthermore, the processor 1001 reads programs (program codes), a software module or data from the storage 1003 and/or the communication apparatus 1004 out to the memory 1002, and executes various types of processing according to these programs, software module or data. As the programs, programs that cause the computer to execute at least part of the operations described in the above-described embodiments are used. For example, the control section 401 of the user terminal 20 may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and a software module that can be executed to perform the radio communication method according to the one embodiment.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via wired and/or radio networks, and will be also referred to as, for example, a network device, a network controller, a network card and a communication module. The communication apparatus 1004 may be configured to include a high frequency switch, a duplexer, a filter and a frequency synthesizer to realize, for example, Frequency Division Duplex (FDD) and/or Time Division Duplex (TDD). For example, the above-described transmission/reception antennas 101 (201), amplifying sections 102 (202), transmitting/receiving sections 103 (203) and channel interface 106 may be realized by the communication apparatus 1004.

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using different buses between apparatuses.

Furthermore, the radio base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or all of each function block. For example, the processor 1001 may be implemented by using at least one of these types of hardware.

### (Modified Example)

In addition, each term that has been described in this description and/or each term that is necessary to understand this description may be replaced with terms having identical or similar meanings. For example, a channel and/or a symbol may be signals (signalings). Furthermore, a signal may be a message. A reference signal can be also abbreviated as an RS (Reference Signal), or may be also referred to as a pilot or a pilot signal depending on standards to be applied. Furthermore, a Component Carrier (CC) may be referred to as a cell, a frequency carrier and a carrier frequency.

Furthermore, a radio frame may include one or a plurality of durations (frames) in a time domain. Each of one or a plurality of durations (frames) that composes a radio frame may be referred to as a subframe. Furthermore, the subframe may include one or a plurality of slots in the time domain. The subframe may be a fixed time duration (e.g., 1 ms) that does not depend on the numerologies.

Furthermore, the slot may include one or a plurality of symbols (Orthogonal Frequency Division Multiplexing (OFDM) symbols or Single Carrier-Frequency Division Multiple Access (SC-FDMA) symbols) in the time domain. Furthermore, the slot may be a time unit based on the numerologies. Furthermore, the slot may include a plurality of mini slots. Each mini slot may include one or a plurality of symbols in the time domain. Furthermore, the mini slot may be referred to as a subslot.

The radio frame, the subframe, the slot, the mini slot and the symbol each indicate a time unit for conveying signals. The other corresponding names may be used for the radio frame, the subframe, the slot, the mini slot and the symbol. For example, 1 subframe may be referred to as a Transmission Time Interval (TTI), a plurality of contiguous subframes may be referred to as TTIs, or 1 slot or 1 mini slot may be referred to as a TTI. That is, the subframe and/or the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as a slot or a mini slot instead of a subframe.

In this regard, the TTI refers to, for example, a minimum time unit of scheduling for radio communication. For example, in the LTE system, the radio base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block and/or codeword, or may be a processing unit of scheduling or link adaptation. In addition, when the TTI is given, a time period (e.g., the number of symbols) in which a transport block, a code block and/or a codeword are actually mapped may be shorter than the TTI.

In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that compose a minimum time unit of the scheduling may be controlled.

The TTI having the time duration of 1 ms may be referred to as a general TTI (TTIs according to LTE Rel. 8 to 12), a normal TTI, a long TTI, a general subframe, a normal subframe or a long subframe. A TTI shorter than the general TTI may be referred to as a reduced TTI, a short TTI, a partial or fractional TTI, a reduced subframe, a short subframe, a mini slot or a subslot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

A Resource Block (RB) is a resource allocation unit of the time domain and the frequency domain, and may include one or a plurality of contiguous subcarriers in the frequency domain. Furthermore, the RB may include one or a plurality of symbols in the time domain or may have the length of 1 slot, 1 mini slot, 1 subframe or 1 TTI. 1 TTI or 1 subframe may each include one or a plurality of resource blocks. In this regard, one or a plurality of RBs may be referred to as a Physical Resource Block (PRB: Physical RB), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and parameters described in this description may be expressed by using absolute values, may be expressed by using relative values with respect to given values or may be expressed by using other corresponding information. For example, a radio resource may be instructed by a given index.

Names used for parameters in this description are in no respect restrictive names. For example, various channels (the Physical Uplink Control Channel (PUCCH) and the Physical Downlink Control Channel (PDCCH)) and information elements can be identified based on various suitable names. Therefore, various names assigned to these various channels and information elements are in no respect restrictive names.

The information and the signals described in this description may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or optional combinations of these.

Furthermore, the information and the signals can be output from a higher layer to a lower layer and/or from the lower layer to the higher layer. The information and the signals may be input and output via a plurality of network nodes.

The input and output information and signals may be stored in a specific location (e.g., memory) or may be managed by using a management table. The information and signals to be input and output can be overwritten, updated or additionally written. The output information and signals may be deleted. The input information and signals may be transmitted to other apparatuses.

Notification of information is not limited to the aspect/embodiments described in this description and may be performed by using other methods. For example, the information may be notified by a physical layer signaling (e.g., Downlink Control Information (DCI) and Uplink Control Information (UCI)), a higher layer signaling (e.g., a Radio Resource Control (RRC) signaling, broadcast information (a Master Information Block (MIB) and a System Information Block (SIB)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") is not limited to explicit notification, and may be performed implicitly (by, for example, not notifying the given information or by notifying another information).

Decision may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using wired techniques (e.g., coaxial cables, optical fiber cables, twisted pairs and Digital Subscriber Lines (DSLs)) and/or radio techniques (e.g., infrared rays and microwaves), these wired techniques and/or radio techniques are included in a definition of the transmission media.

The terms "system" and "network" used in this description are compatibly used.

In this description, the terms "Base Station (BS)", "radio base station", "eNB", "gNB", "cell", "sector", "cell group", "carrier" and "component carrier" can be compatibly used. The base station will be also referred to as a term such as a fixed station, a NodeB, an eNodeB (eNB), an access point, a transmission point, a reception point, a femtocell or a small cell in some cases.

The base station can accommodate one or a plurality of (e.g., three) cells (also referred to as sectors). When the base station accommodates a plurality of cells, an entire coverage area of the base station can be partitioned into a plurality of smaller areas. Each smaller area can also provide communication service via a base station subsystem (e.g., indoor small base station (RRH: Remote Radio Head)). The term "cell" or "sector" indicates part or the entirety of the coverage area of the base station and/or the base station subsystem that provide communication service in this coverage.

In this description, the terms "Mobile Station (MS)", "user terminal", "User Equipment (UE)" and "terminal" can be compatibly used.

The mobile station will be also referred to by a person skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

Furthermore, the radio base station in this description may be read as the user terminal. For example, each aspect/embodiment of the present disclosure may be applied to a configuration where communication between the radio base station and the user terminal is replaced with communication between a plurality of user terminals (D2D: Device-to-Device). In this case, the user terminal 20 may be configured to include the functions of the above-described radio base station 10. Furthermore, words such as "uplink" and "downlink" may be read as a "side". For example, the uplink channel may be read as a side channel.

Similarly, the user terminal in this description may be read as the radio base station. In this case, the radio base station 10 may be configured to include the functions of the above-described user terminal 20.

In this description, operations performed by the base station are performed by an upper node of this base station depending on cases. Obviously, in a network including one or a plurality of network nodes including the base stations, various operations performed to communicate with a terminal can be performed by base stations, one or more network nodes (that are supposed to be, for example, Mobility Management Entities (MMEs) or Serving-Gateways (S-GWs) yet are not limited to these) other than the base stations or a combination of these.

Each aspect/embodiment described in this description may be used alone, may be used in combination or may be switched and used when carried out. Furthermore, orders of the processing procedures, the sequences and the flowchart according to each aspect/embodiment described in this description may be rearranged unless contradictions arise. For example, the method described in this description presents various step elements in an exemplary order and is not limited to the presented specific order.

Each aspect/embodiment described in this description may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New Radio Access Technology (New-RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods and/or next-generation systems that are expanded based on these systems.

The phrase "based on" used in this description does not mean "based only on" unless specified otherwise. In other words, the phrase "based on" means both of "based only on" and "based at least on".

Every reference to elements that use names such as "first" and "second" used in this description does not generally limit the quantity or the order of these elements. These names can be used in this description as a convenient method for distinguishing between two or more elements. Hence, the reference to the first and second elements does not mean that only two elements can be employed or the first element should precede the second element in some way.

The term "deciding (determining)" used in this description includes diverse operations in some cases. For example, "deciding (determining)" may be regarded to "decide (determine)" calculating, computing, processing, deriving, investigating, looking up (e.g., looking up in a table, a database or another data structure) and ascertaining. Furthermore, "deciding (determining)" may be regarded to "decide (determine)" receiving (e.g., receiving information), transmitting (e.g., transmitting information), input, output and accessing (e.g., accessing data in a memory). Furthermore, "deciding (determining)" may be regarded to "decide (determine)" resolving, selecting, choosing, establishing and comparing. That is, "deciding (determining)" may be regarded to "decide (determine)" some operation.

The words "connected" and "coupled" used in this description or every modification of these words can mean every direct or indirect connection or coupling between 2 or more elements, and can include that 1 or more intermediate elements exist between the two elements "connected" or "coupled" with each other. The elements may be coupled or connected physically or logically or by a combination of the physical and logical connections. For example, "connection" may be read as "access".

It can be understood in this description that, when connected, the two elements are "connected" or "coupled" with each other by using 1 or more electric wires, cables and/or printed electrical connection, and by using electromagnetic energy having wavelengths in radio frequency domains, microwave domains and/or (both of visible and invisible) light domains in some non-restrictive and non-comprehensive examples.

A sentence that "A and B are different" in this description may mean that "A and B are different from each other". Words such as "separate" and "coupled" may be also interpreted in a similar manner.

When the words "including" and "comprising" and modifications of these words are used in this description or the claims, these words intend to be comprehensive similar to the word "having". Furthermore, the word "or" used in this description or the claims intends not to be an exclusive OR.

The invention according to the present disclosure has been described in detail above. However, it is obvious for a person skilled in the art that the invention according to the present disclosure is not limited to the embodiments described in this description. The invention according to the present disclosure can be carried out as modified and changed aspects without departing from the gist and the scope of the invention defined based on the recitation of the claims. Accordingly, the disclosure of this description is intended for exemplary explanation, and does not bring any restrictive meaning to the invention according to the present disclosure.

## Claims

1. A user terminal comprising:
a receiving section that receives downlink control information including instruction information in relation to a plurality of frequency domains, the instruction information instructing a slot format associated with a frequency domain; and
a control section that specifies the frequency domain associated with the instruction information, and decides a transmission direction used in the specified frequency domain according to the slot format instructed by the instruction information,
wherein, when a payload size of the downlink control information is a first value or less and a number of pieces of the instruction information included in the downlink control information exceeds a second value, the control section assumes that the downlink control information includes the instruction information associated with a carrier in a serving cell.

2. A radio communication method of a user terminal comprising:
receiving downlink control information including instruction information in relation to a plurality of frequency domains, the instruction information instructing a slot format associated with a frequency domain;
specifying the frequency domain associated with the instruction information, and deciding a transmission direction used in the specified frequency domain according to the slot format instructed by the instruction information; and
when a payload size of the downlink control information is a first value or less and a number of pieces of the instruction information included in the downlink control information exceeds a second value, assuming that the downlink control information includes the instruction information associated with a carrier in a serving cell.
